# FASCICULE DE BREVET EUROPEEN

(11) **EP 1 484 235 B1**
(45) Date de publication et mention de la délivrance du brevet: **22.08.2007**
(21) Numéro de dépôt: 04291372.3
(22) Date de dépôt: 02.06.2004
(51) Int. Cl.: B62D 25/08, B62D 25/16, B60R 21/34, B62D 21/15

(54) **Support d'aile pour véhicule automobile**
Kotflügelträger eines Kraftfahrzeugs
Vehicle wing support

(30) Priorité: 03.06.2003 FR 0306675; 23.09.2003 FR 0311159
(43) Date de publication de la demande: 08.12.2004
(73) Titulaire: COMPAGNIE PLASTIC OMNIUM, 69007 Lyon (FR)
(72) Inventeur: Roux, Jean-Pierre, 69480 Pommiers (FR); Pierrot, Frédéric, 01150 Lagnieu (FR); Andre, Gérald, 01500 Amberieu en Bugey (FR)
(74) Mandataire: de la Bigne, Guillaume Michel Marie

(56) Documents cités:
- EP-A- 1 138 579
- EP-A- 1 293 417
- DE-A- 10 102 187
- GB-A- 2 362 615
- US-A1- 2001 025 462
- PATENT ABSTRACTS OF JAPAN vol. 2003, no. 01, 14 janvier 2003 (2003-01-14) & JP 2002 249076 A (TOYOTA MOTOR CORP), 3 septembre 2002 (2002-09-03)
- PATENT ABSTRACTS OF JAPAN vol. 2000, no. 02, 29 février 2000 (2000-02-29) & JP 11 321718 A (HONDA MOTOR CO LTD), 24 novembre 1999 (1999-11-24)

## Description

La présente invention concerne un support d'aile pour véhicule automobile.

Il est connu de fixer une aile de véhicule automobile sur la structure de ce dernier par l'intermédiaire d'un support, quelquefois désigné support d'aile, qui est lui-même fixé à la structure rigide du véhicule, elle-même désignée caisse en blanc.

Les supports connus peuvent être des fixations, auxquelles on a ajouté des fonctionnalités comme le positionnement de l'aile, l'aptitude à supporter des dilatations, la fusibilité en cas de choc pour préserver l'aile, ou encore le soutien de l'aile pour éviter son cloquage.

Un exemple de support d'aile fourni par l'état de la technique est décrit dans le document EP 0 839 704. Ce support comporte, sur sa face externe destinée à recevoir une aile, un réseau de nervures épousant la forme intérieure de l'aile.

Mais ces supports connus présentent une carence à l'égard des chocs de têtes de piétons.

De tels chocs sont actuellement définis par le groupe de travail "Piétons" (WG 17) de l'European Enhanced Véhicule Safety Commitee et par la procédure EuroNCAP. Ces chocs sont dirigés du haut vers le bas avec un angle variable entre la direction d'impact et le sol. L'impacteur qui modélise la tête du piéton est de forme sphérique et a une masse comprise entre 2,5 Kg et 4,7 Kg.

De manière plus générale, les définitions de chocs de têtes de piétons, présentes et à venir, fournissent des critères qui peuvent évoluer en fonction du lieu et de l'époque. L'homme du métier pourra aisément s'y adapter au moment de la mise en oeuvre de la présente invention.

Le choc théorique est celui de la tête d'un piéton renversé par un véhicule et se couchant sur l'avant du véhicule. Si l'impact de la tête se trouve dans la région centrale du capot, l'enfoncement de ce dernier peut suffire à absorber suffisamment d'énergie pour préserver la tête du piéton, sous réserve que soient traitées d'autres difficultés spécifiques aux chocs capot et sortant du cadre de la présente description. En revanche, si la zone d'impact concernée coïncide avec le bord supérieur de l'aile, le risque est que la rigidité intrinsèque du rebord de l'aile, ajoutée à celle du rebord du capot, qui est voisin du rebord de l'aile, réduise les possibilités d'absorption d'énergie et génère une décélération trop importante pour la tête du piéton.

Un support d'aile de véhicule conformément au préambule de la revendication 1 est connu du document GB 2362615 A.

La présente invention vise à proposer une nouvelle pièce support d'aile qui, comme les supports connus, permette un positionnement aisé et précis de l'aile sur la structure du véhicule, ainsi que par rapport aux autres pièces de carrosserie du véhicule, et qui, simultanément, amortit efficacement le choc d'une tête d'un piéton sur le bord supérieur de l'aile.

De plus, la nouvelle pièce support d'aile selon l'invention permet de respecter efficacement les contraintes usuelles d'un cahier des charges concernant une aile de véhicule automobile, telles que la tenue à l'ensoleillement, la résistance au cloquage ou à un appui fessier.

En plus de l'absorption d'énergie, le support selon l'invention vise à apporter un complément de rigidité à l'aile, grâce à sa structure particulière.

La présente invention a pour objet un support d'aile de véhicule automobile tel que décrit dans la revendication 1 de la présente demande.

Ainsi, le support selon l'invention présente les deux caractéristiques de posséder une âme métallique, par exemple en tôle, et de comporter des nervures assurant, d'une part, une fonction de rigidification en Y, d'autre part une fonction d'absorption en Z par flambement des nervures et déformation de l'âme.

Il est rappelé que la direction Y est la direction transversale du véhicule, perpendiculaire à la verticale Z et à la direction longitudinale X, ou direction de roulement, du véhicule.

Grâce à ses nervures, le support de l'invention peut satisfaire au critère de décélération en Z pour les chocs de têtes de piétons.

Selon un mode de réalisation particulier, l'âme métallique comporte des ajours visant à réduire sa rigidité en Z pour satisfaire des critères de décélération prédéfinis.

Le support selon l'invention est particulièrement adapté à des ailes en matière plastique, d'un seul tenant, qui facilitent le traitement des chocs de têtes de piétons grâce à leur moins grande rigidité dans la région de leur bord supérieur.

De préférence, les nervures s'étendent verticalement sur 60 à 90 mm, en fonction de la géométrie de l'aile et de la structure du véhicule, ainsi que de l'efficacité de protection désirée.

Dans ce mode de réalisation, les nervures sont formées parallèlement à des plans verticaux et ne sont reliées à l'âme métallique que par leurs extrémités, en étant libres sur toute leur hauteur. Ainsi, un effort appliqué sur le support, principalement selon la direction verticale, ne sollicite aucune liaison autre que des appuis entre les nervures et l'âme et permet à l'âme de se déformer et aux nervures de flamber, sans combinaison des inerties de l'âme d'une part, des nervures d'autre part.

Pour remplir leur fonction de rigidification en Y, les nervures sont avantageusement perpendiculaires au plan général vertical de l'âme, c'est-à-dire qu'elles sont perpendiculaires à la direction longitudinale du véhicule. De cette manière, même sans cohésion avec l'âme, les nervures peuvent contribuer à la résistance du support en cas de sollicitation transversale, par exemple lors d'un choc, d'un appui ou d'une dilatation thermique de l'aile.

De plus, cette géométrie et cette disposition des nervures facilitent le maintien en Y de l'aile et limitent ses possibilités de déplacement selon la direction transversale Y.

Dans un autre mode de réalisation particulier de l'invention, compatible avec les précédents, les nervures sont surmoulées sur l'âme métallique, par une technique connue en elle-même de surmoulage.

De préférence, les nervures et les ajours sont agencés de telle manière que la rigidification du support d'aile soit variable le long de ce support d'aile. En effet, par exemple, il peut être important que le support d'aile ne réagisse pas de la même manière à un choc tête enfant qu'à un choc tête adulte, en présentant une rigidité moins grande aux endroits du support d'aile susceptible de recevoir un choc tête enfant. Afin de réduire cette rigidité aux endroits du support d'aile susceptible de recevoir un choc tête enfant, il est possible, par exemple, d'agencer des ajours plus grands, d'espacer d'avantage les nervures, ou de jouer sur l'épaisseur ou la forme de ces nervures.

Le support selon l'invention comporte, selon un autre mode de réalisation particulier, compatible avec les précédents, une partie inférieure rigide prévue pour sa fixation à la structure du véhicule.

Cette partie inférieure est tout d'abord avantageuse en tant que partie servant à la fixation du support sur la structure du véhicule.

Mais elle présente un autre avantage, qui peut s'avérer essentiel pour l'efficacité de la protection en cas de choc tête, à savoir qu'elle présente une hauteur variable, permettant au support d'absorber des différences de place disponible en Z entre la structure du véhicule et le bord supérieur de l'aile, tout en conservant une hauteur constante, donc une efficacité constante d'absorption d'énergie, à la partie supérieure du support.

Selon d'autres caractéristiques avantageuses de l'invention, qui peuvent être prises seules ou en combinaison :
- L'âme métallique a une section en S ou en C.
- La partie inférieure de l'âme métallique comporte un réseau de nervures de rigidification.
- L'âme métallique comporte des trous de fixation pour une aile et, éventuellement, pour la structure du véhicule.
- Des formes de fixation supplémentaires sont surmoulées sur l'âme métallique, en même temps que les nervures, pour adjoindre des fonctions supplémentaires au support d'aile.

De préférence, l'âme métallique du support d'aile selon l'invention comporte au moins une pièce d'interface avec une pièce de carrosserie voisine de l'aile, par exemple un capot. Dans le cas où cette pièce d'interface est une serrure, ou autre moyen d'accroche du capot sur le support d'aile, le capot accompagnera le support d'aile dans sa déformation en cas de choc tête. Dans d'autres cas, la pièce d'interface peut être une butée de capot, ou un support de joint d'étanchéité de capot.

Afin de faciliter la compréhension de l'invention, on va maintenant en décrire des modes de réalisation, données à titre d'exemples non limitatifs de la portée de l'invention, à l'aide des dessins annexés dans lesquels :
- la figure 1 représente, en perspective, une portion d'extrémité d'un support d'aile selon un premier mode de réalisation de l'invention, vu de l'extérieur ;
- la figure 2 est une vue analogue à la figure 1 représentant le support vu de l'intérieur ;
- la figure 3 est une vue analogue à la figure 2, le support d'aile se déformant sous l'effet d'une compression verticale,
- la figure 4 représente, en perspective, l'âme métallique d'un support d'aile selon un deuxième mode de réalisation de l'invention, vue de l'extérieur ;
- la figure 5 est une vue en perspective selon la direction V de la figure 4, l'âme portant des nervures,
- la figure 6 est une vue à plus grande échelle de la région VI du support de la figure 5, vu de l'intérieur ;
- la figure 7 est une vue analogue à la figure 6 lors d'une déformation du support,
- la figure 8 montre le support en situation, vu de l'intérieur, entre une aile et la structure du véhicule ;
- la figure 9 est une vue en perspective d'une portion d'extrémité d'un support d'aile selon un troisième mode de réalisation de l'invention, vu de l'intérieur.

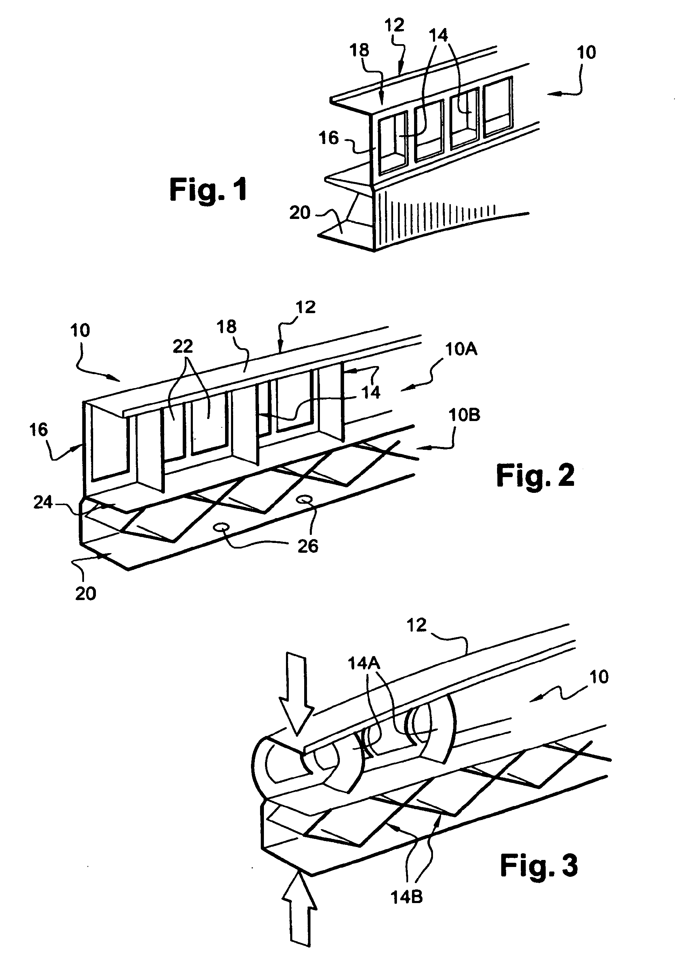

Le support représenté sur le dessin, désigné par une référence générale 10, est une structure hybride, constituée par une âme 12 en tôle à section verticale en forme de C (vue selon la figure 2) et par des nervures 14 en matériau thermoplastique.

Plus précisément, l'âme métallique 12 se compose d'une paroi 16 verticale (dans l'orientation du dessin) et de deux rebords 18 et 20 sensiblement horizontaux (dans l'orientation du dessin) s'étendant perpendiculairement à la paroi verticale 16, suivant la direction longitudinale du support 10.

Le support 10 est fonctionnellement divisé en deux parties 10A et 10B, situées dans l'exemple au-dessus et en dessous du décrochement, bien que cette coïncidence soit fortuite.

La partie supérieure 10A comporte des ajours rectangulaires 22 ménagés dans la paroi verticale 16. Ces ajours 22 ont pour fonction de diminuer la rigidité en Z de l'âme métallique 12 dans cette partie supérieure 10A, afin de faciliter sa déformation en cas de compression verticale, comme représenté à la figure 3.

Sur cette figure, la flèche supérieure représente la force exercée sur le support 10 par le bord supérieur d'une aile recevant l'impact d'une tête de piéton et la flèche inférieure représente la réaction de la structure du véhicule, de sorte que le support 10 est bien comprimé verticalement.

La partie inférieure 10B du support 10, dépourvue d'ajours, est plus rigide que la partie supérieure 10A et ne se déforme pas lors de cette compression.

Cette différence de comportement entre les parties supérieure 10A et inférieure 10B du support 10 est accentuée par les nervures 14 qui vont maintenant être décrites.

Les nervures 14 sont, comme l'âme métallique 12, divisées en deux groupes, 14A et 14 B, l'un supérieur et l'autre inférieur.

Les nervures 14A du groupe supérieur s'étendent verticalement (dans l'orientation du dessin), c'est-à-dire perpendiculairement aux rebords 18 et 20, et perpendiculairement à la paroi verticale 16 de l'âme 12. Elles sont réparties sur la longueur du support 10 à raison d'une tous les deux ajours 22.

Les parties supérieure 10A et inférieure 10B du support sont séparées par un plan 24 venu de moulage avec les nervures 14, disposé sensiblement parallèlement au bord 18 de l'âme métallique 12.

Ce plan 24 sert d'appui aux nervures 14A du groupe supérieur par sa face supérieure, et aux nervures 14B du groupe inférieur par sa face inférieure.

Les nervures 14 sont réalisées par surmoulage de l'âme métallique 12 et adhèrent à la face intérieure de l'âme 12. Toutefois, par exception, les nervures 14A du groupe supérieur sont désolidarisées de la paroi verticale 16 et ne sont en conséquence reliées à l'âme métallique 12 que par leurs bords supérieurs qui adhèrent à la face inférieure du rebord supérieur 18.

Il en résulte que les nervures 14A du groupe supérieur ont une inertie très faible suivant la direction verticale et que la compression verticale du support provoque l'écrasement de sa partie supérieure, les nervures 14A pouvant aisément flamber sans être retenues par la paroi verticale 16 de l'âme métallique 12, comme cela apparaît clairement sur la figure 3.

En d'autres termes, les nervures 14A du groupe supérieur ne gênent pas la déformation de la partie supérieure 10A du support en cas de choc avec la tête d'un piéton.

En revanche, ces nervures 14A ont une fonction de rigidification pour le support 10 en cas d'effort transversal, c'est-à-dire suivant la direction Y du véhicule, en cas de sollicitation latérale contre l'aile, car leur inertie dans la direction Y est plus élevée pour deux raisons : d'une part, elles sont solidaires par leurs extrémités du bord supérieur 18 de l'âme métallique 12 et du plan de séparation 24, de sorte que leur flambement est empêché, et d'autre part, elles sont moins longues dans cette direction transversale Y que dans la direction verticale Z, et par conséquent, à rayon de courbure égal, elles pourraient moins facilement s'écraser, même si elles étaient libres de le faire.

Le plan de séparation 24 est lui aussi solidaire de la paroi verticale de l'aile.

Les nervures 14B du groupe inférieur sont agencées en un nid d'abeilles, en étant inclinées par rapport au bord inférieur 20 de l'âme 12 et au plan de séparation 24, et croisées entre elles. Leurs bords sont solidaires de la partie inférieure 10B de l'âme métallique 12, c'est-à-dire le bord inférieur 20 et la partie inférieure de la paroi verticale 16, ainsi que du plan de séparation 24 entre les deux groupes de nervures.

Ainsi agencées et maintenues en réseau, les nervures 14B du groupe inférieur constituent une structure rigide adaptée pour résister aux sollicitations transmises par l'aile en cas d'accident.

De plus, leur orientation leur confère une grande inertie suivant la direction Y, ce qui leur permet de jouer un rôle d'absorbeur en cas de sollicitation latérale contre l'aile, et au moins d'assurer un maintien durable de l'aile dans la direction transversale Y du véhicule.

La partie inférieure 10B du support, rigidifiée par les nervures 14B, peut donc comporter des moyens 26 de fixation à la structure du véhicule.

Ainsi, le support 10 en entier constitue un moyen de mise en position durable de l'aile, notamment suivant la position verticale Z.

Dans une variante non représentée, le plan de séparation entre les deux groupes de nervures est constitué par une tôle métallique solidaire de l'âme métallique, rapporté sur cette dernière par tout moyen approprié, par exemple par soudage.

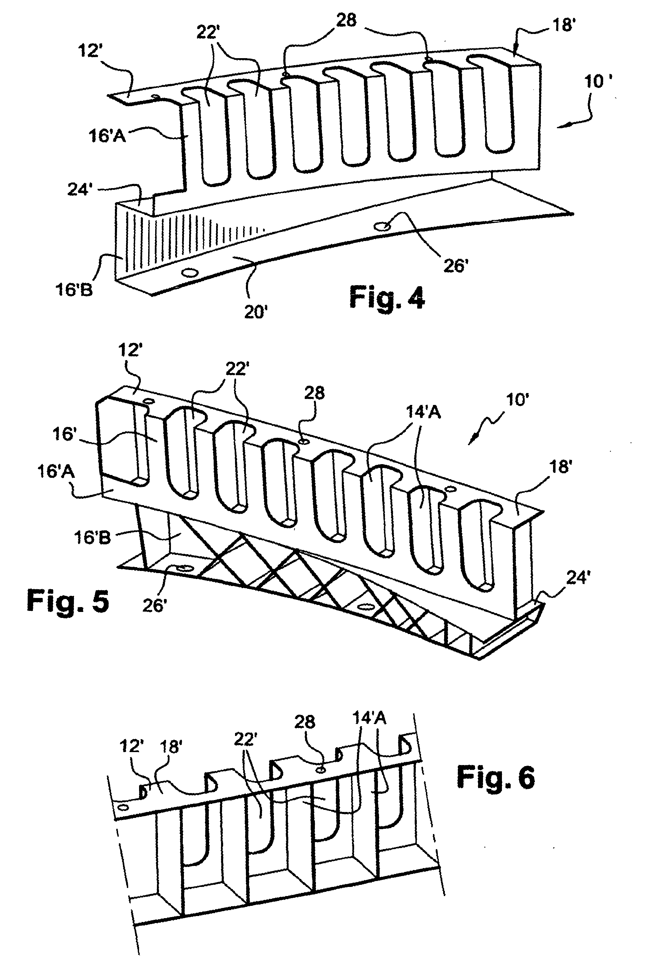

Dans un autre mode de réalisation, illustré par les figures 4 à 8, l'âme métallique 12' présente une section transversale en S et non en C. Dans ce cas, la paroi verticale 16' se situe pour une moitié à l'intérieur du support 10' et pour l'autre moitié à l'extérieur du support 10' et le plan de séparation 24' est constitué par une portion horizontale de l'âme 12' reliant les deux moitiés de la paroi verticale 16'. De préférence, la partie supérieure 16'A de la paroi verticale 16' est extérieure et sa partie inférieure 16'B est intérieure, ce qui permet de prévoir des orifices de fixation 26' du support 10' sur la structure du véhicule et procure un moyen simple de montage du support 10' sur cette structure. De plus, la partie supérieure 16'A peut également comporter des orifices 28' pour la fixation de l'aile.

D'autres différences structurelles entre le support des figures 4 à 8 et celui des figures 1 à 3 peuvent être soulignées :
- les nervures 14'A du groupe supérieur sont réparties à raison d'une entre deux ajours 22' successifs,
- les ajours 22' se prolongent sur le bord supérieur 18' de l'âme métallique 12'.

Le comportement du support 10' selon ce deuxième mode de réalisation est sensiblement le même que le comportement précédemment décrit selon le premier mode de réalisation.

Sur la figure 5, on voit bien que la partie inférieure du support présente une hauteur décroissante vers l'avant du véhicule, tandis que sa partie supérieure présente une hauteur constante.

Ainsi, l'efficacité de la protection en cas de choc tête est la même quelque soit le point d'impact de la tête d'un piéton le long du bord supérieur de l'aile.

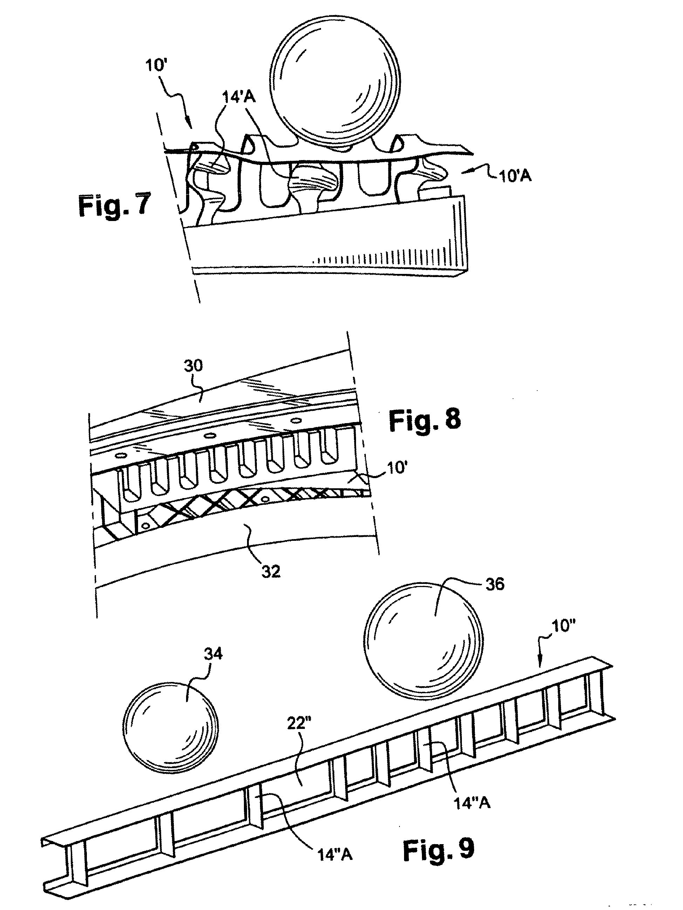

Sur la figure 8, on voit l'agencement du support entre une aile 30 et la structure du véhicule, constituée ici par un longeron supérieur 32.

La structure du véhicule est alors haute et basse. Elle est composée de deux longerons supérieurs 32 rabaissés par rapport à une architecture classique et des longerons classiques (non représentés).

En particulier, en cas de choc vertical avec la tête d'un piéton, comme on le voit sur la figure 7, les nervures 14'A du groupe supérieur flambent et ne gênent pas l'écrasement de la partie supérieure 10'A du support 10', absorbant ainsi l'énergie du choc et préservant tant que faire se peut la tête du piéton.

Dans un troisième mode de réalisation, représenté sur la figure 9, les nervures 14"A et les ajours 22" sont agencés de telle manière que la rigidification du support d'aile 10" soit variable le long de ce support d'aile 10".

Dans une zone du support d'aile 10" susceptible de recevoir un choc tête enfant, la tête enfant étant modélisée par la sphère 34, les ajours 22" sont plus grands, et les nervures 14"A sont plus espacées que dans une zone du support d'aile 10" susceptible de recevoir un choc tête adulte, la tête adulte étant modélisée par la sphère 36.9

Dans chacun des modes de réalisation décrits, l'âme métallique (12 ; 12' ; 12") peut comporter au moins une pièce d'interface avec une pièce de carrosserie voisine de l'aile, par exemple un capot.

Il est bien entendu que les modes de réalisation qui viennent d'être décrits ne présentent aucun caractère limitatif et qu'ils pourront recevoir toute modification désirable sans sortir du cadre de l'invention, telle que revendiquée.

## Revendications

1. Support d'aile de véhicule automobile (10 ; 10') ayant une partie supérieure comportant des fixations pour une aile, et des nervures (14A ; 14'A) agencées pour rigidifier le support lors de sollicitations dirigées selon une direction transversale lorsque le support d'aile est monté sur le véhicule, **caractérisé en ce que** le support comprend une âme métallique (12 ; 12') ayant une partie supérieure munie des fixations pour l'aile, et **en ce que** les nervures (14A ; 14'A) n'ont pas de cohésion latérale avec l'âme métallique (12 ; 12'), de manière à pouvoir flamber en cas de choc dirigés vers le bas, lorsque le support d'aile (10 ; 10') est monté sur le véhicule.

2. Support d'aile de véhicule automobile (10 ; 10') selon la revendication 1, dans lequel l'âme métallique (12 ; 12') comporte des ajours (22 ; 22') visant à réduire sa rigidité pour satisfaire des critères de décélération prédéfinis.

3. Support d'aile de véhicule automobile (10 ; 10') selon la revendication 1 ou 2, dans lequel les nervures (14A ; 14'A) s'étendent verticalement sur 60 à 90 mm, en fonction de la géométrie de l'aile et de la structure du véhicule.

4. Support d'aile de véhicule automobile (10 ; 10') selon l'une quelconque des revendications précédentes, dans lequel les nervures (14A; 14'A) sont formées parallèlement à des plans verticaux.

5. Support d'aile de véhicule automobile (10 ; 10') selon l'une quelconque des revendications précédentes, dans lequel les nervures (14A ; 14'A) sont perpendiculaires au plan général vertical de l'âme.

6. Support d'aile de véhicule automobile (10 ; 10') selon l'une quelconque des revendications précédentes, dans lequel les nervures (14A ; 14'A) sont surmoulées sur l'âme métallique (12 ; 12').

7. Support d'aile de véhicule automobile (10; 10') selon l'une quelconque des revendications 2 à 6 dans lequel les nervures (14A; 14'A) et les ajours (22 ; 22') sont tels que la rigidification du support d'aile (10 ; 10') soit variable le long de ce support d'aile (10, 10').

8. Support d'aile de véhicule automobile (10 ; 10') selon l'une quelconque des revendications précédentes, comportant une partie inférieure rigide (10B ; 10'B) pour sa fixation à la structure du véhicule.

9. Support d'aile de véhicule automobile (10 ; 10') selon l'une quelconque des revendications précédentes, dont la partie inférieure rigide présente une hauteur variable, permettant au support d'absorber des différences de place disponible en Z entre la structure du véhicule et le bord supérieur de l'aile, tout en conservant une hauteur constante à la partie supérieure du support.

10. Support d'aile de véhicule automobile (10 ; 10') selon l'une quelconque des revendications 8 et 9, dans lequel la partie inférieure rigide du support (10B ; 10'B) comporte un réseau de nervures de rigidification (14B ; 14'B).

11. Support d'aile de véhicule automobile (10 ; 10') selon l'une quelconque des revendications précédentes, dans lequel l'âme métallique (12 ; 12') a une section en S ou en C.

12. Support d'aile de véhicule automobile (10 ; 10') selon l'une quelconque des revendications précédentes, dans lequel les fixations pour une aile sur l'âme métallique (12 ; 12') sont des trous de fixation (28 ; 28').

13. Support d'aile de véhicule automobile (10; 10') selon l'une quelconque des revendications précédentes, dans lequel l'âme métallique (12; 12') comporte au moins une pièce d'interface avec une pièce de carrosserie voisine de l'aile, par exemple un capot.

## Claims

1. A support for a motor vehicle fender (10 ; 10'), the support having a top portion provided with fasteners for a fender, and being provided with ribs (14A ; 14'A) arranged to stiffen the support when stressed in the transverse direction while the fender support is mounted on the vehicle, **characterized in that** the support comprises a metal core (12 ; 12') having a top portion provided with said fasteners for the fender, and **in that** said ribs do not present lateral cohesion with the metal core, so as to be capable of buckling in the event of an impact, while the fender support is mounted on the vehicule.

2. A motor vehicle fender support (10, 10') according to claim 1, in which the metal core (12, 12') includes openings (22, 22') seeking to reduce its stiffness so as to satisfy predefined deceleration criteria.

3. A motor vehicle fender support (10, 10') according to claim 1 or 2, in which the ribs (14A, 14'A) extend vertically over a range of 60 mm to 90 mm, as a function of the shape of the fender and of the vehicle structure.

4. A motor vehicle fender support (10, 10') according to any one of claim 1 to 3, in which the ribs (14A, 14'A) are formed parallel to vertical planes.

5. A motor vehicle fender support (10, 10') according to anyone of claim 1 to 4, in which the ribs (14A, 14'A) are perpendicular to the general vertical plane of the core.

6. A motor vehicle fender support (10, 10') according to anyone of claims 1 to 5 in which the ribs are overmolded on the metal core.

7. A motor vehicle fender support (10, 10') according to anyone of claims 2 to 6, in which the ribs (14A, 14'A) and the openings (22, 22') are such that the stiffening of the fender support (10, 10') varies along said fender support (10, 10').

8. A motor vehicle fender support (10, 10') according to anyone of claims 1 to 7, and including a rigid bottom portion (10A, 10'B) for securing to the vehicle structure.

9. A motor vehicle fender support (10, 10') according to anyone of claims 1 to 8, in which the rigid bottom portion is of varying height, enabling the support to accommodate differences in the space available in the Z-direction between the vehicle structure and the top edge of the fender, while conserving a height for the top portion of the support that is constant.

10. A motor vehicle fender support (10, 10') according to claim 8 or 9, in which the rigid bottom portion of the support (10B, 10'B) includes an array of stiffening ribs (14B, 14'B).

11. A motor vehicle fender support according to anyone of claims 1 to 10, in which the metal core (12, 12') has a section that is S-shaped or C-shaped.

12. A motor vehicle fender support (10, 10') according to anyone of claims 1 to 11, in which the fastenings for enabling the fender to be fastened to the metal core (12, 12') are fastening holes (28, 28').

13. A motor vehicle fender support (10, 10') according to anyone of claims 1 to 12, in which the metal core (12, 12') includes at least one interface piece for providing an interface with a bodywork part that is adjacent to the fender, e.g. a hood.

## Patentansprüche

1. Kotflügelhalterung für Kraftfahrzeuge (10; 10') mit einem Oberteil, das mit Befestigungen für einen Kotflügel versehen ist, und mit Rippen (14A; 14'A), die so angeordnet sind, dass sie die Halterung bei Beanspruchungen versteifen und die in einer Querrichtung ausgerichtet sind, wenn die Kotflügelhalterung auf dem Fahrzeug montiert ist, **dadurch gekennzeichnet, dass** die Halterung einen Metallsteg (12; 12') mit einem Oberteil umfasst, das mit den Befestigungen für den Kotflügel versehen ist, und **dadurch**, dass die Rippen (14A; 14'A) keinen seitlichen Zusammenhalt mit dem Metallsteg (12; 12') aufweisen, so dass sie im Fall von einem nach unten gerichteten Stoß knicken können, wenn die Kotflügelhalterung (10; 10') auf das Fahrzeug montiert ist.

2. Kotflügelhalterung für Kraftfahrzeuge (10; 10') nach Anspruch 1, in der der Metallsteg (12; 12') Durchbrüche (22; 22') aufweist, die dazu vorgesehen sind, seine Steifigkeit zu verringern, um vorbestimmte Verzögerungskriterien zu erfüllen.

3. Kotflügelhalterung für Kraftfahrzeuge (10; 10') nach Anspruch 1 oder 2, in der sich die Rippen (14A; 14'A) in Abhängigkeit von der Geometrie des Kotflügels und der Struktur des Fahrzeuges vertikal über 60 bis 90 mm erstrecken.

4. Kotflügelhalterung für Kraftfahrzeuge (10; 10') nach einem der vorhergehenden Ansprüche, in der die Rippen (14A; 14'A) parallel zu vertikalen Ebenen gebildet sind.

5. Kotflügelhalterung für Kraftfahrzeuge (10; 10') nach einem der vorhergehenden Ansprüche, in der die Rippen (14A; 14'A) senkrecht zur vertikalen allgemeinen Ebene des Stegs verlaufen.

6. Kotflügelhalterung für Kraftfahrzeuge (10; 10') nach einem der vorhergehenden Ansprüche, in der die Rippen (14A; 14'A) auf den Metallsteg (12; 12') aufgepresst sind.

7. Kotflügelhalterung fur Kraftfahrzeuge (10; 10') nach einem der Anspruche 2 bis 6, in der die Rippen (14A; 14'A) und die Durchbrüche (22; 22') derartig sind, dass die Versteifung der Kotflügelhalterung (10; 10') an dieser Kotflügelhalterung (10; 10') entlang variabel ist.

8. Kotflügelhalterung für Kraftfahrzeuge (10; 10') nach einem der vorhergehenden Ansprüche mit einem starren Unterteil (10B; 10'B) für ihre Befestigung an der Struktur des Fahrzeuges.

9. Kotflügelhalterung für Kraftfahrzeuge (10; 10') nach einem der vorhergehenden Ansprüche, deren starres Unterteil eine variable Höhe aufweist, die es der Halterung erlaubt, die Differenzen des verfügbaren Platzes bei Z zwischen der Struktur des Fahrzeuges und dem oberen Rand des Kotflügels aufzunehmen und dabei dem Oberteil der Halterung eine konstante Höhe zu bewahren.

10. Kotflügelhalterung für Kraftfahrzeuge (10; 10') nach einem der Ansprüche 8 und 9, in der das starre Unterteil der Halterung (10B; 10'B) ein Netz aus Versteifungsrippen (14B; 14'B) aufweist.

11. Kotflügelhalterung für Kraftfahrzeuge (10; 10') nach einem der vorhergehenden Ansprüche, in der der Metallsteg (12; 12') einen S- oder C-förmigen Querschnitt aufweist.

12. Kotflügelhalterung für Kraftfahrzeuge (10; 10') nach einem der vorhergehenden Ansprüche, in der die Befestigungen für einen Kotflügel auf dem Metallsteg (12; 12') Befestigungslöcher (28; 28') sind.

13. Kotflügelhalterung für Kraftfahrzeuge (10; 10') nach einem der vorhergehenden Ansprüche, in der der Metallsteg (12; 12') zumindest ein Verbindungsteil zu einem Karosserieteil neben dem Kotflügel, beispielsweise eine Motorhaube, umfasst.
